# EUROPEAN PATENT SPECIFICATION

(11) **EP 3 981 359 B1**
(45) Date of publication and mention of the grant of the patent: **10.04.2024**
(21) Application number: 21201974.9
(22) Date of filing: 11.10.2021
(51) Int. Cl.: A61C 8/00

(54) **DENTAL IMPLANT**
ZAHNIMPLANTAT
IMPLANT DENTAIRE

(30) Priority: 09.10.2020 IT 202000023839
(43) Date of publication of application: 13.04.2022
(73) Proprietor: GASPARON, Ugo, 36016 Thiene (VI) (IT)
(72) Inventor: GASPARON, Ugo, 36016 Thiene (VI) (IT)
(74) Representative: Feltrinelli, Secondo Andrea

(56) References cited:
- EP-A1- 0 580 945
- EP-A1- 1 547 543
- WO-A2-2020/100106

## Description

### TECHNICAL FIELD OF THE INVENTION

The present invention relates to an endo-osseous dental implant that can be attached to a mandibular or maxillary portion, with an artificial tooth being connectable to the latter.

### STATE OF THE ART

As is known, dental prostheses can be used for solving dental problems, i.e. elements, made of ceramic or other biocompatible material, which replace the original teeth lost or compromised for functional or aesthetic reasons.

Dental prostheses can be of the removable or fixed type.

Fixed dental prostheses can be attached to the patient's jaw or mandible through a special attachment screw - dental implant - which is surgically inserted into a seat made in the identified bone portion.

The dental implant, that is the attachment screw, has a cylindrical shape having two threads at opposite ends: a first thread able to engage in the bone seat and a second thread that can be engaged by a dental prosthesis - artificial tooth - so as to constrain the prosthesis to the dental implant and, thus, to the bone.

The attachment screw may have a first portion having the first thread, which extends along an axis inclined with respect to that of a second portion having the second thread, so as to allow using the implant should it be necessary to make a seat extending along an inclined axis with respect to that of installation of the artificial tooth.

For this purpose, it is known to produce implants which have an attachment screw provided with a first portion and a second portion inclined to each other. However, with the aim of limiting production costs, the inclination available between the first portion and the second portion is limited to some predetermined angles.

Such a solution, actually, limits the versatility of use of such a dental implant, since, in particularly complex cases, it must be obtained an implant with a specific geometry, with consequent increase in costs for the patient, or the need to redefine the surgery resulting in a compromise between the bone morphology of the implantation site and the configurations of the implants normally available on the market.

The international application published under number WO2020100106A2 describes a dental implant having an anchoring body comprising a stem and a head portion operatively connected to an abutment by means of a spherical coupling. The abutment comprises an annular element and a support element which can be connected to each other. Therefore, this solution provides for the realization and subsequent assembly of the abutment in several parts, which, during installation, could cause numerous difficulties for the surgeon. Furthermore, the spherical coupling between the head portion of the anchoring body and the abutment limits the possible inclination of the implant to specific intervals, i.e. beyond a certain inclination it is not possible to couple, due to mechanical constraints, the abutment and the head of the anchoring body.

Furthermore, the implant taught by WO2020100106A2, in particular depending on the configuration of the abutment, does not allow to intervene when the gingiva is particularly low.

EP1547543 defines an implant consisting of a tapered bone screw with a threaded blind bore at the top end which accommodates a screw with a ball-shaped head which fits into a recess in the end of a tapered post, and an inwardly-curved end forming a socket engaging the ball-shaped head.

A need is felt in the field to have a dental implant that is even more versatile than the state of the art and that can be easily adapted to the morphology of the implant site and that is simple to make and easy to be installed by the specialized surgeon.

### OBJECTS OF THE INVENTION

Thus, the main object of the present invention is to improve the state of the art relating to a dental implant.

Within the field of this aim, an object of the present invention is to provide an adjustable dental implant capable of being adapted to the specific morphology of the implant site.

Another object of the present invention is to provide a dental implant that can be easily implanted in a suitable mandibular or maxillary bone seat, regardless of the position/inclination of this seat.

A further object of the present invention is to provide a dental implant configured to prevent the formation of areas of bacterial growth, accumulation of food or plaque at the implant site.

Another object of the present invention is to provide a dental implant that is simple to make and easy to install for the specialized surgeon.

Finally, a further object of the present invention is to provide a dental implant that allows high adjustability during installation.

Another object of the present invention is to provide a dental implant which guarantees effective use even in cases of particularly low gingiva.

In accordance with one aspect of the present invention there is provided a dental implant according to claim 1.

The dependent claims refer to preferred and advantageous embodiments of the invention.

### BRIEF DESCRIPTION OF THE DRAWINGS

Further features and advantages of the present invention will become more evident from the detailed description of preferred, non-exclusive, embodiments of a dental implant, illustrated by way of a non-limiting example in the enclosed drawing tables in which:
- figures 1 to 3 are front views of a dental implant according to the present invention, each with the abutment in a respective trim;
- figure 4 is an exploded perspective view of the dental implant of figure 1;
- figure 5 is a section view along the line V-V of figure 1;
- figure 6 is an exploded perspective view of a further version of the dental implant according to the present invention;
- figure 7 is a section view similar to figure 5 of the dental implant of figure 6;
- figure 8 is an exploded perspective view of a further version of a dental implant according to the present invention;
- figure 9 is a section view similar to figure 5 of the dental implant in figure 8.

### PREFERRED EMBODIMENTS OF THE INVENTION

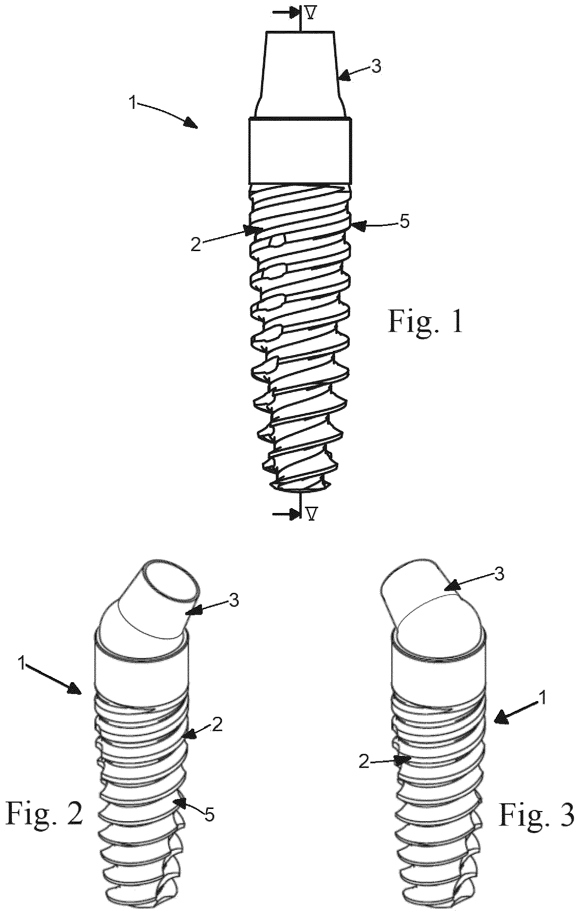

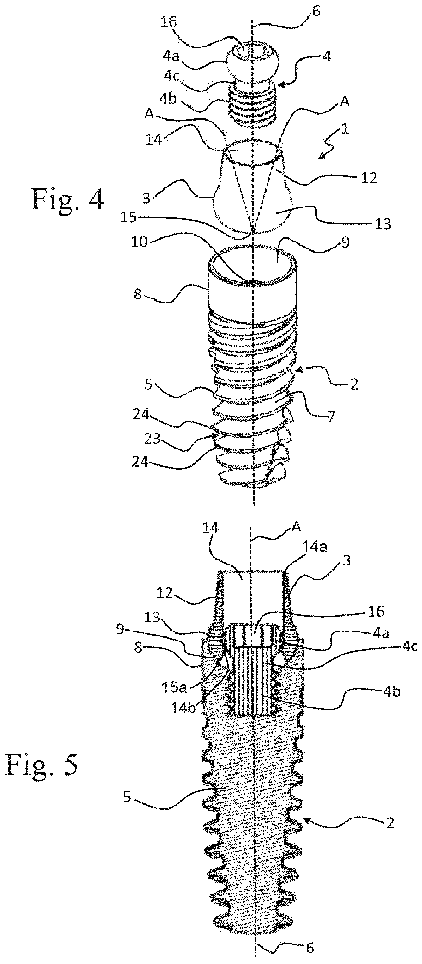

With reference to figures 1 to 5, a dental implant according to the present invention is wholly indicated with 1.

The dental implant 1 comprises an anchoring body 2, to constrain the dental implant 1 itself to a mandibular or maxillary portion of a patient, and an abutment 3 to which a dental crown or artificial tooth not shown in the attached figures can be connected.

The connection between the dental crown or artificial tooth and the abutment 3 can take place according to methods known in the field, for example by means of cement or a conical coupling, screwing, etc.

The abutment 3 identifies an axis A for the installation of a dental crown or artificial tooth. Preferably, the abutment 3 is configured as a solid of rotation around an axis of symmetry coinciding with axis A.

The anchoring body 2 and the abutment 3 are operationally connected to each other by means of a connection element 4, as better indicated hereinafter.

The anchoring body 2 has a stem 5, which extends along a longitudinal axis 6 of the anchoring body 2 itself and which defines the surgical axis of implant insertion.

The stem 5 has a thread 7 to promote the screwing of the anchoring body 2 into a suitably prepared mandibular or maxillary bone seat, and a head portion 8, to which the abutment 3 can be associated.

In fact, the head portion 8 is provided at one end of the stem 5 in a position opposite to the thread 7.

The head portion 8 defines a first internal cavity 9, for example shaped like a hemisphere or a sphere portion and the anchoring body 2 then defines an opening 10, if desired internally threaded, which extends from the bottom of the first internal cavity 9 or in any case which opens into the latter. Basically, the opening 10 extends within the stem 5 of the anchoring body 2.

Preferably, the head portion 8 is configured as a solid of rotation with respect to an axis of symmetry coinciding with the longitudinal axis 6.

Of course, according to the particular application requirements, the shaping of the first internal cavity 9 could also be of different shapes, for example rectangular, square, hexagonal, etc.

As will be explained better below, part of the abutment 3 is mounted or articulated in the first internal cavity 9 so as to effectively obtain a ball joint engagement between the abutment 3 and the anchoring body 2, so as to allow the angular displacement of the abutment 3 with respect to the anchoring body 2, clearly when the connection element 4 is not tightened.

Preferably, the opening 10 extends into the stem 5 and starting from a central or median portion of the head portion 8. Alternatively, as will be better described below, the anchoring body 2 can have a projection 118 extending within the first internal cavity 9.

The abutment 3 can be operationally connected to the head portion 8 through the connection element 4.

Moreover, the abutment 3 defines a through longitudinal seat 14, 15 with a end 14a distal from the anchoring body 2 and a end 15a proximal to the latter. Basically, the abutment 3 is configured as a tubular component.

Furthermore, the connection element 4 can be inserted in the longitudinal seat 14, 15 starting from the distal end 14a of the anchoring body until it engages the opening 10 or the projection and thus mutually constrains the abutment 3 and the anchoring body. 2. The section of the longitudinal seat 14, 15 is therefore such as to allow the insertion of the connection element 4 into the distal end 14a and the passage of the connection element 4 into the seat 14, 15 until it engages the opening 10 or the projection.

Advantageously, the connection element 4 is adjustably movable between at least one fixing or stabilizing position of the abutment 3 with respect to the anchoring body 2 (see figures 1, 2, 3 and 5), in which the abutment 3 cannot be angularly displaced with respect to the anchoring body 2, and at least one release position of the abutment 3 (not shown in the figures), in which the abutment 3 can be angularly displaced with respect to the anchoring body 2, the connection element 4 being in engagement with the opening 10 or the projection in the fixing or stabilizing position.

Basically, in at least one fixing or stabilizing position the connection element 4 locks or constrains the abutment 3 in position with respect to the anchoring body 2, so that these components 2, 3 cannot move relative to each other, while in the at least one release position the connection element 4 does not block or mutually constrains the anchoring body 2 and the abutment 3, so that it is possible to move the abutment 3 angularly with respect to the anchoring body 2, actually thanks to the ball joint engagement, so as to adjust the implant as desired, to then check the connection element 4 again to return to a fixation or stabilization position and thus lock the abutment 3 in position.

Even more advantageously, the connection element 4 is operated or operable starting from the distal end 14a to move it between the at least one fixing or stabilizing position and the at least one release position and vice versa. With regard to this aspect, which will be explained better later, it is possible to act, if desired, by means of a special tool on the connection element 4 to make it rotate or in any case move and thus pass from a fixing or stabilizing position to a release position or vice versa.

Advantageously, the longitudinal through seat 14, 15 has, from the outside and in the direction of approaching to the anchoring body 2, a first portion 14 distal from the anchoring body 2 and defined by a first section 12 of the abutment 3, and therefore at least one second portion 15 proximal to the anchoring body 2 and defined by a second section 13 of the abutment 3, which second portion 15 has a section at least partially lower than the first portion 14 so as to define an internal shoulder 14b facing away from the anchoring body 2 .

Clearly, the first portion 14 could also have a variable section approaching the anchoring body 2 and the same applies to the second portion 15, although the same portions 14, 15 have a configuration such as to define the internal shoulder 14b preferably defining the smallest section of the longitudinal seat. In this regard, according to the embodiment illustrated in the figures, the section of the longitudinal seat approaching the anchoring body 2 or the stem 5 of the same first gradually decreases and after passing the internal shoulder 14b slightly increases.

Preferably, the internal shoulder 14b is annular, but it could also be configured with two or more sectors, for example angular, and thus not a continuous ring.

If desired, the first section or distal section 12 can have a frusto-conical or substantially frusto-conical shape while the second section or proximal section 13 can be configured as part of a sphere or substantially as a hemisphere.

Naturally, in other versions of the present invention other configurations can be provided for both the first 12 and the second 13 section, for example a first section 12 having a substantially cylindrical shape and a second section 13 having a discoidal shape.

Actually, the configuration of the second section 13 is externally substantially complementary to the configuration of the internal cavity 9, so as to guarantee a *de facto* ball joint engagement between the anchoring body 2 and the abutment 3.

In this case, the connecting element 4 can comprise an engagement portion 4b of the opening 10 or projection with a first section or bulk less than the section of the first portion 14 and of the second portion 15 as well as an abutment portion 4a against the internal shoulder 14b having a second section or external bulk lower than the section of the first portion 14 and larger than the section of the longitudinal seat at the internal shoulder 14b.

With such a structure, the connection element 4 can be inserted in the longitudinal seat 14, 15, as long as the abutment portion 4a abuts against the internal shoulder 14b between the first 14 and second 15 portion.

However, a connecting portion 4c of the engagement portion 4b and the abutment portion 4a may also be provided, also with a section or overall dimensions smaller than the section of the first portion 14 and of the second portion 15.

The connection element 4 may or may not be in one piece.

The abutment portion 4a can for example be substantially configured as a sphere having a diameter smaller than the diameter or section of the first portion 14, but larger than the diameter or section of the longitudinal seat at the internal shoulder 14b, thus being able to engage at least a part of the second section 13 of the abutment 3, while the engagement portion 4b can be configured as a stem at least partially externally threaded, which has a diameter or external dimensions smaller than the longitudinal seat 14, 15 and can be engaged, for example by screwing with the opening 10, if desired internally threaded, and thus it is suitable for being engaged in the latter.

Advantageously, the connection element 4 delimits an engagement seat 16 at its distal end from the anchoring body 2 by means of a tool to allow the clamping of the connection element 4 in the opening or with the projection.

In the attached figures the central seat 16 is shown hexagonal. It is understood that the central seat 16 can be shaped in a different way while falling within the same inventive concept of the present invention.

By way of non-limiting example, the central seat 16 can have a square, triangular, elliptical or the like shape, without any limitation.

In practice, by inserting or bringing the second section 13 of the abutment 3 into abutment in the internal cavity 9 of the head portion 8, a ball joint engagement is actually obtained, and subsequently inserting the connection element 4 into the longitudinal seat 14, 15 then engaging it at the respective engagement portion 4b, for example by screwing with the opening 10 or with the projection, the abutment portion 4a is progressively brought against the internal shoulder 14b of the abutment 3, and then, tightening the connection element 4, the abutment 3 is constrained to the anchoring body 2.

In fact, before the insertion of the connection element 4 or before, following the engagement of the latter or better of the respective engagement portion 4b with the opening 10 or the projection, the abutment 3 is in fact fixed (fixation or stabilization position) to the anchorage body 2, since it is locked between the latter and the connection element 4, it is possible to move the abutment 3 angularly (release position of the abutment) with respect to the anchorage body and then arrange it with desired inclination.

Thanks to this, it is possible to adjust the inclination of the axis A of the abutment 3 with respect to the longitudinal axis 6 of the stem 5 substantially with any inclination in space.

It is therefore possible to incline the axis A of the abutment 3 with an inclination angle between approximately -50° and approximately +50°, for example between approximately -30° and +30° with respect to the longitudinal axis 6 of the stem 5 of the anchoring body 2.

It should be noted that the abutment 3 can advantageously be, in addition to being inclined with respect to the longitudinal axis 6 of the stem 5 of the anchoring body 2, also rotated by any angle, for example between 0° and 360° around this longitudinal axis 6, so as to configure a ball joint engagement, when clearly the connecting element 4 is not tightened.

Basically, it is possible to incline the abutment 3 with a solution of continuity without predetermined steps.

Subsequently, following the complete tightening of the engagement portion 4b of the connection element 4 with the opening 10 or projection of the anchoring body 2, the abutment 3 will be locked in a predetermined position.

If desired, the stem 5 can be of the self-tapping type.

According to this version, the stem 5 can have at the lower end, opposite the head portion 8, some cavities 23 arranged symmetrically around the longitudinal axis 6. Each cavity 23 extends starting from the free end of the stem 5 through a portion of the thread 7 and defines at least one edge or cutting surface 24 which extends along the cavity 23 itself. The edge or the cutting surface 24 can be inclined to promote the removal of small bone fragments from the cavity 23 itself while screwing the anchoring body 2 into the implant bone site.

Clearly, according to a variant, the connection element 4 could be engaged with the opening 10 or the projection not by screwing, but for example by forced insertion, bayonet engagement or other suitable method.

Below is a brief description of the installation method of the dental implant 1 according to the present invention.

A dental implant 1 is provided comprising an anchoring body 2 operatively associated with an abutment 3.

In particular, the second section 13 of the abutment 3, housed at least partially in the internal cavity 9 of the head portion 8, is interposed between the internal cavity 9 of the head portion 8 of the anchoring body 2 and the abutment portion 4a of the connection element 4. Naturally, the connection element or rather the engagement portion 4b of the connection element 4 is coupled with the anchoring body or better with the opening 10, if desired threaded, delimited by the anchoring body 2.

After identifying and preparing the mandibular or maxillary bone site to which the dental implant 1 is to be constrained, the surgeon proceeds by introducing the free end of the anchoring body 2 in this location.

Subsequently, the surgeon screws the anchoring body 2 into the bone seat, actuating the anchoring body 2 itself in rotation around the longitudinal axis 6.

Initially, the abutment 3 is movable with respect to the anchoring body 2 as it is not yet fully or stably tightened between the latter and the connection element 4.

Once the phase of insertion of the anchoring body 2 is completed, the abutment 3 is adjusted to the predetermined implant position and the connection element 4 is tightened, with a predetermined clamping force, to firmly lock the abutment 3 in position relative to the anchoring body 2.

More precisely, the abutment portion 4a is clamped against the internal shoulder 14b of the abutment 3 by exerting an opposite stress with respect to that of the internal cavity 9, effectively retaining the abutment 3 itself between the connection element 4 and the anchoring body 2.

The tightening of the connection element 4 takes place by means of a special tool in engagement for example in the central opening 16, which is accessible through the distal end 14 of the abutment 3.

Therefore, the connection element 4 acts as a clamping element designed to firmly hold in position at least a part of the second section 13, thus constraining the abutment 3 itself in a specific position relative to the anchoring body 2.

As can be understood, the assembly and operation of the implant 1 is very versatile, since it is possible to adjust the inclination of the abutment 3 at will in a wide range of adjustability, and also very simple, since very few components are used.

Furthermore, consider that in addition to the inclination of the abutment 3 it is also possible to adjust its rotation, in fact, increasing the versatility of the implant 1.

Moreover, this can be done by acting on the connection element 4 from the longitudinal seat 14, 15 starting from a distal end 14a of the same, which entails a clear advantage in terms of speed and effectiveness of action, both at the time of the first installation of the system, and in the event that it is necessary to make adjustments to the system or replace components of the same or other adjacent systems.

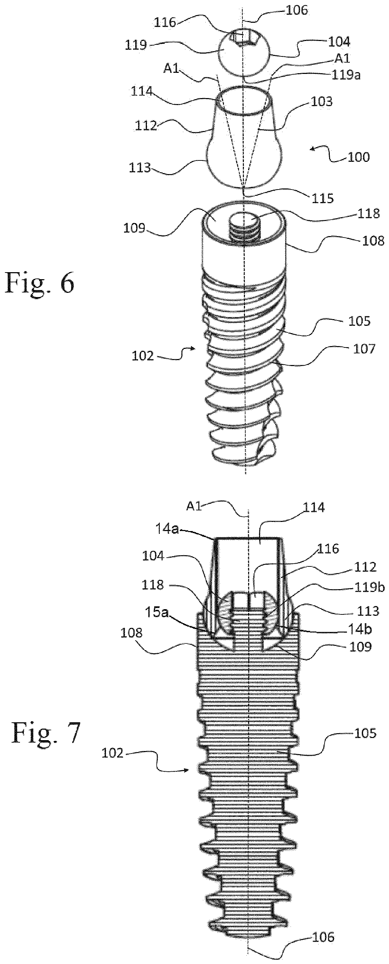

A further version of the dental implant according to the present invention is illustrated in figures 6 and 7 and indicated with the number 100.

The components described in relation to the previous embodiment will be indicated with the same reference numbers increased by one hundred units.

The dental implant 100 differs from the one described above for the configuration of the connection element 104 and the internal cavity 109 of the head portion 108 of the anchoring body 102.

The abutment 103, corresponding to the abutment 3 described above, can be associated, through its connection with the connection element 104, to at least a part of the internal cavity 109 of the head portion 108 of an anchoring body 102.

As mentioned in the previous example, the anchoring body 102 has a stem 105, which extends along a longitudinal axis 106 of the anchoring body 102 itself and which defines the surgical axis of implant insertion.

The stem 105 carries a thread 107, to promote the screwing of the anchoring body 102 into a suitably prepared mandibular or maxillary bone seat, and a head portion 108, to which the abutment 103 and also the connection element 104 can be associated.

The head portion 108 has an internal cavity 109, for example shaped like a hemisphere or a sphere portion, and the anchoring body 102 has a projection 118 extending into the first internal cavity 109 or from the stem 105, which projection can for example have a substantially cylindrical shape. The projection 118 can be fully or partially externally threaded and serves for the engagement of the connection element 104 and therefore for the tightening of the abutment 103 in a manner similar to those described above.

In this regard, the connection element 104 in this version of the invention can be substantially configured as a parallelepiped, a cone, a truncated cone or a sphere, for example with caps removed and having an external bulk or larger diameter, at least for part of its extension to the width of the longitudinal seat 114, 115, in particular at the level of the internal shoulder 14b, but lower than the longitudinal seat in particular at the distal 114 or proximal end 115.

Basically, the connection element 104 can be inserted in the longitudinal seat 114, 115, at the respective distal end and once inserted in this opening 114, 115 it will abut at its own portion, for example at a section with a larger external diameter or bulk, on the internal shoulder 14b and, if desired, will protrude beyond the latter towards or approaching the proximal end of the longitudinal seat 114, 115 for engagement, for example by screwing the projection 118.

Thus, for example, if the connection element 104 has a substantially spherical external configuration, it will have an engagement portion 119 which is a portion of the sphere, in use, proximal to the anchoring body 103 and which goes beyond the internal shoulder 14b.

In this case, the connection element 104 delimits an opening 119a, if desired but not necessarily a through opening 119a, for example internally threaded for the engagement of the projection 118, if desired externally threaded.

Advantageously, the connection element has or delimits an engagement seat 116, if desired but not necessarily constituting the continuation of the through opening 119a.

The engagement seat 116 can be engaged by a tool, thereby allowing the tightening of the connection element 104 with the projection 118 of the head portion 108 of the anchoring body 102.

In the attached figures, the engagement seat 116 is shown hexagonal. It is understood that the engagement seat 116 can be shaped in a different way while falling within the same inventive concept of the present invention.

By way of non-limiting example, the engagement seat 116 can have a square, triangular, elliptical or the like shape, without any limitation.

Actually, by inserting the lower section 113 of the abutment 103 into the internal cavity 109 of the head portion 108, preferably obtaining a ball joint engagement, and subsequently inserting the connection element 104 into the longitudinal seat defined by the abutment and then engaging, for example by screwing, if desired through the engagement seat 116 and by means of a tool, the engagement portion 119 of the connection element 104 with the projection 118 in the internal cavity 109, the connection element 104 moves progressively and adjustably to abut against the internal shoulder 14b of the abutment 103 thus tightening the abutment 103 to the anchoring body 102, thereby reaching the fixing or stabilizing position of the abutment 103.

As a matter of fact, the operative connection between at least part of the abutment 103 and the head portion 108 of the anchoring body 102 (ball joint engagement) allows the adjustment of the inclination of the axis A1 of the abutment 103 with respect to the longitudinal axis 106 of the stem 105 substantially with any inclination in space.

It should be noted that the abutment 103 can advantageously be, in addition to being inclined with respect to the longitudinal axis 106 of the stem 105 of the anchoring body 102, also rotated by any angle around this longitudinal axis 106.

Basically, the abutment 103 can be both inclined with respect to, and rotated around, for example with a rotation angle between about 0° and about 360°, the longitudinal axis 106 of the stem 105 of the anchoring body 102.

Subsequently, following the complete tightening of the connection element 104 with the projection 118 of the head portion 108 of the anchoring body 102, the abutment 103 will be locked in a predetermined position.

The installation procedure of the dental implant 100 is similar to that of the dental implant 1 described above.

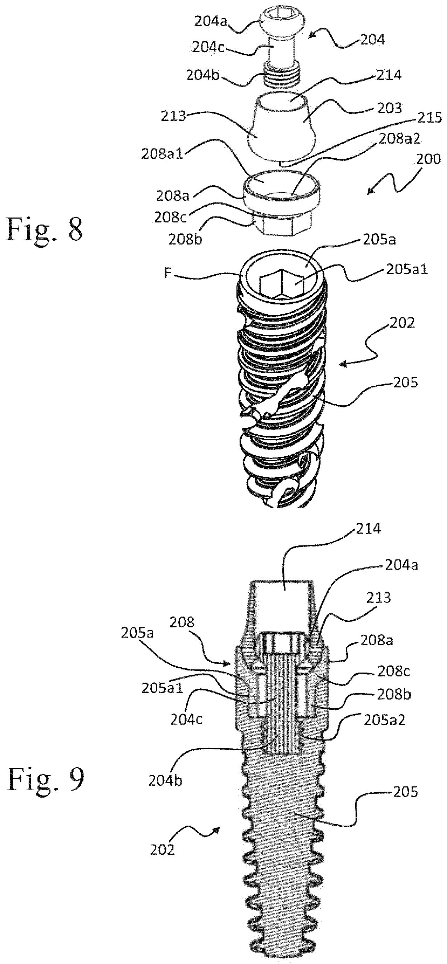

A further version of the dental implant according to the present invention is illustrated in figures 8 and 9 and indicated with the number 200.

In this version, the head portion 208 of the anchoring body 202 is not made in a single body with the stem 205, but it is removable from the latter.

More specifically, there is a connection element 204 structurally similar to the connection element 4 described in the embodiment of the dental implant 1, which acts as a connection between said stem 205 and said head portion 208.

This connection element 204 comprises an abutment portion 204a and an engagement portion 204b, for example mutually connected by means of a connection portion 204c. Clearly, the connecting element 204 may or may not be in one piece.

Similarly to the first embodiment of the dental implant 1, the abutment portion 204a can be substantially configured as a sphere or an ellipsoidal or parallelepiped element with a diameter or external dimensions smaller than the diameter or dimension of a first part 214 of the longitudinal seat, but greater than that of the second part 215, therefore being able to engage at least a part of the second portion 213 of the abutment 203, while the engagement portion 204b can be configured as an externally threaded stem or cylinder.

In this case, the stem 205 comprises a face F, if desired substantially annular, which, in use, faces towards the abutment 3, a main seat 205a being delimited in the stem 205 comprising a first recess 205a1 and a second recess 205a2, for example internally threaded and extending from the bottom of the first recess 205a1. The second recess 205a2 can for example have a diameter or section smaller than the first recess 205a1. The second recess 205a essentially has the function of the opening indicated above as 10.

The head portion 208, on the other hand, has a tubular configuration and comprises a first portion 208a, for example substantially configured as a portion of a sphere or hemisphere defining the first internal cavity 109 and a second portion 208b extending starting from the first portion 208a and which can be inserted, for example, substantially to size or can be screwed into the first recess 205a1.

Clearly, the abutment 203 can be operatively associated with the first portion 208a by engaging the connection element 204 in the second recess 205a2.

In the embodiment of figures 8 and 9, the second portion 208b has a substantially hexagonal shape, but other shapes can clearly be provided, for example configured as a morse taper.

The through opening defined in the head portion 208 therefore has a first segment 208a1 distal from the anchoring body 203 and defined by the first portion 208a and, following the first section, a second segment 208a2 proximal to the anchoring body 203 and defined by the second portion 208b.

This first portion 208a actually defines a housing seat for the abutment 203 or better for at least a part of the second section 213 of the abutment 203, and in this respect it should be noted that the same is configured as the other versions of the invention.

The abutment 203 or rather at least a part of the second section 213 of the abutment 203 can therefore be operationally associated within the first segment 208a1.

Subsequently, it is possible to hold or tighten the anchoring body 202 and the abutment 203 through the connection element 204.

This connection element 204 is inserted through the through openings 214, 215 until the abutment portion 204a is brought into abutment against the internal shoulder of the abutment 203.

The engagement portion 204b is instead engaged in the main seat 205a or better in the second recess 205a2 of the main seat 205a.

In a first step, when the connection element 204 or better the engagement portion 204b of the connection element 204 is not completely engaged yet in the second recess 205a2 of the main seat 205a, the abutment 203 is still movable and adjustable (release position).

After the adjustment of the abutment 203 in the predetermined implant position has ended, the connection element 204 is tightened, with a predetermined clamping force, to firmly lock the abutment 203 in position relative to the anchoring body 202.

As it will be possible to ascertain, the variant of figures 8 and 9 makes it possible the use the present invention even in combination with a stem 205 of dental implants already proposed in the market. Clearly, even in this case, the use of the various elements (for example 204, 203 or 208) according to the present invention ensures obtaining all the already indicated advantages, such as in particular the advantage of being able to angularly move the abutment 203 in a simple way, even with components (stem 205) of existing systems.

Therefore, a dental implant 1, 100, 200 according to the present invention, makes it possible to reduce the invasiveness and duration of a surgical intervention necessary for its installation, thereby reducing the discomfort caused to the patient.

Furthermore, a dental implant 1, 100, 200 according to the present invention makes it possible to simplify the assembly during installation to the patient, thereby reducing possible errors.

In this regard, as we have already discussed, the tightening of the connection element takes place by means of a special tool in engagement for example in the central opening 16, 116 which is accessible through the distal end of the abutment 3.

The connection element therefore acts as a clamping element designed to firmly hold in position at least a part of the abutment 3, 103, 203 in a specific position relative to the anchoring body 2, 102, 202.

As can be understood, the assembly and operation of the implant 1, 100, 200 is very versatile, since it is possible to adjust the inclination of the abutment 3, 103, 203 as desired in a wide range of adjustability, and also very simple, as very few components are used.

Furthermore, one should consider that in addition to the inclination of the abutment 3, 103, 203 it is also possible to adjust its rotation, actually increasing the versatility of the implant 1, 100, 200, thereby obtaining a ball joint engagement.

Moreover, this can be done by acting on the connection element from the longitudinal seat starting from a distal end of the same, which entails an evident advantage in terms of speed and effectiveness of action, both at the time of the first installation of the implant, that in the event that it is necessary to make changes to the system or replace its components.

It has thus been seen that the present invention fully achieves the proposed aims.

The present invention has been described according to preferred embodiments but variants can be conceived without departing from the scope of protection offered by the following claims.

Furthermore, the invention thus conceived is susceptible of numerous modifications and variations, all of which are within the scope of the inventive concept as defined in the claims.

Furthermore, with respect to prior solutions, such as for example the one taught by the international application published under number WO2020100106A2, the present invention, thanks in particular to the fact that one end of the abutment is engaged within a cavity inside the anchoring body, allows to lower the abutment and consequently also the dental crown close to the bone in order to make it possible to use it even in cases of particularly low gingiva.

In addition, all the details can be replaced by other technically equivalent elements. In practice, the materials used, as well as the contingent shapes and dimensions, may be any according to requirements without thereby departing from the scope of the protection of the following claims. In the event that the technical characteristics mentioned in the claims are followed by reference numbers, these reference numbers are introduced with the sole purpose of increasing the clarity of the claims and consequently the aforementioned reference numbers do not have a limiting effect on the interpretation of each element identified as an example by such reference numbers.

## Claims

1. Dental implant (1, 100, 200) comprising an anchoring body (2, 102, 202), said anchoring body (2, 102, 202) including a stem (5, 105, 205) having a thread (7, 107) engageable in a mandibular or maxillary seat, an abutment (3, 103, 203) to which a dental crown can be connected, wherein said anchoring body (2, 102, 202) and said abutment (3, 103, 203) are operatively connected to each other through a connection element (4, 104, 204), said anchoring body (2, 102, 202) comprising a head portion (8. 108, 208) delimiting a first internal cavity (9, 109, 209), said anchoring body (2, 102, 202) delimiting an opening (10) extending from the bottom of said first internal cavity (9, 109, 209) or having a projection (118) extending into said first internal cavity (9, 109, 209), said abutment (3, 103, 203) comprising a section, in use, proximal (12, 112) to said anchoring body and a section, in use, distal (13, 113) from said anchoring body (2, 102, 202), said abutment (3, 103, 203) being operatively associable with said anchoring body (2, 102, 202) by engaging said connection element (4, 104, 204) in said opening (10) or with said projection (118), said abutment (3, 103, 203) defining a through longitudinal seat (14, 15, 114, 115) with an end distal (14a) from said anchoring body (2, 102, 202) and an end proximal (14b) to the latter, said connection element (4, 104, 204) being insertable in said longitudinal seat (14, 15, 114, 115) starting from said distal end (14a) until it engages said opening (10) or said projection (118) and thus mutually constraining said abutment (3, 103, 203) and said anchoring body (2, 102, 202), wherein part (13, 113) of said abutment (3, 103, 203) is mounted in said first internal cavity (9, 109, 209) so as to obtain a ball joint engagement between the abutment (3, 103, 203) and the anchoring body (2, 102, 202).

2. Implant according to claim 1, wherein said connection element (4, 104, 204) is adjustably movable between at least one fixing or stabilizing position of the position of said abutment (3, 103, 203) with respect to said anchoring body (2, 102, 202), in which position said abutment (3, 103, 203) cannot be angularly displaced with respect to said anchoring body (2, 102, 202), and at least one release position of said abutment (3, 103, 203) in which position said abutment (3, 103, 203) can be angularly displaced with respect to said anchoring body (2, 102, 202), said connection element (4, 104, 204) being in engagement with said opening (10) or said projection (118) at least in said fixing or stabilizing position.

3. Implant according to claim 1 or 2, wherein said connection element (4, 104, 204) is operated or operable from said distal end (14a) to move it between said at least one fixing or stabilizing position and said at least one release position.

4. Implant according to claim 1, 2 or 3, wherein said through longitudinal seat has, from the outside and in the direction of approaching to said anchoring body (2, 102, 202), a first portion (14) and therefore at least a second portion (15) having a section at least partially lower than said first portion (14) so as to define an internal shoulder (14b) facing away from said anchoring body (2, 102, 202).

5. Implant according to claim 4, wherein said connection element (4, 104, 204) comprises a portion for engaging (4b) said opening (10) or said projection (118) with a first section or encumbrance smaller than the section of said first portion (14) and of said second portion (15) as well as an abutment portion (4a) against said internal shoulder (14b) having a second section or external encumbrance less than the section of said first portion (14) and greater than the section of said longitudinal seat at said internal shoulder (14b).

6. Dental implant according to any one of the preceding claims, wherein said head portion (8, 108, 208) is made in a single piece with said stem (5, 105, 205).

7. Dental implant according to any one of the preceding claims, wherein said stem (5, 105, 205) extends along a longitudinal axis (6, 106, 206) of said anchoring body (2, 102, 202), and wherein said abutment (3, 103, 203) identifies an axis (A) for the installation of a dental crown or artificial tooth, said axis (A) of said abutment (3, 103, 203) being inclinable with an angle of inclination between approximately -50° and about +50° with respect to said longitudinal axis (6, 106, 206) of said stem (5, 105, 205) of said anchoring body (2, 102, 202).

8. Dental implant according to any one of the preceding claims, wherein said abutment (3, 103, 203) comprises a section, in use, distal (12, 112) from said anchoring body (2, 102, 202) with a substantially cylindrical or frusto-conical configuration defining a first portion (14, 114) of said longitudinal seat and a section, in use, proximal (13, 113) to said anchoring body (2, 102, 202) configured at least partially as a sphere or part of a sphere defining a second portion (15, 115) of said through longitudinal seat.

9. Dental implant according to any one of the preceding claims, wherein said opening (10) is internally threaded or said projection (118) is externally threaded, while said connection element (4, 104, 204) comprises an externally threaded stem (4b) for engaging said internally threaded opening (10) or an internally threaded portion for engaging said externally threaded projection (118).

10. Dental implant according to any one of the preceding claims when dependent on claim 5, wherein said abutment portion (4a) of said connection element (4, 104, 204) is configured as a sphere or substantially as a sphere, while said engaging portion (4b) is configured as a stem which is at least partially externally threaded.

11. Dental implant any one of the preceding claims, wherein said connection element (4, 104, 204), at its end distal from said anchoring body, defines a seat engageable (16) by means of a tool, thereby making it possible to clamp said connection element (4) in said opening (10) or with said projection (118).

12. Dental implant according to any of the preceding claims, wherein said connection element (4, 104, 204) defines a seat (119b) for the engagement of said projection (118).

13. Dental implant according to any one of the preceding claims, wherein said anchoring body comprises a first part defining said head portion (208) and a second part defining said stem (205), said head portion (208) being removably connectable to said stem (205), said opening being formed in said stem (205) or said projection extending from said stem (205).

14. Implant according to claim 13, wherein said stem (205) comprises a face (F), in use, facing said abutment, in said stem being delimited a main seat (205a) comprising a first recess (205a1) and a second recess (205a2) internally threaded and extending from the bottom of the first recess (205a1) and wherein said head portion (208) is tubularly-shaped and comprises a first portion (208a) substantially configured as a portion of a sphere or hemisphere defining said first internal cavity (9, 109, 209) and a second section (208b) extending from said first portion (208a) and which can be inserted substantially to size in said first recess (205a1), said abutment (203) being operatively associable with said first portion (208a) by engaging said connection element (204) in at least said second recess (205a2).

## Patentansprüche

1. Zahnimplantat (1, 100, 200), umfassend einen Verankerungskörper (2, 102, 202), der besagte Verankerungskörper (2, 102, 202) beinhaltend einen Schaft (5, 105, 205) mit einem Gewinde (7, 107), das in einen Unterkiefer- oder Oberkiefersitz in Eingriff bringbar ist, ein Abutment (3, 103, 203), mit dem eine Zahnkrone verbunden werden kann, worin der besagte Verankerungskörper (2, 102, 202) und das besagte Abutment (3, 103, 203) durch ein Verbindungselement (4, 104, 204) miteinander wirkverbunden sind, wobei der besagte Verankerungskörper (2, 102, 202) einen Kopfabschnitt (8, 108, 208) umfasst, der einen ersten inneren Hohlraum (9, 109, 209) begrenzt, wobei der besagte Verankerungskörper (2, 102, 202) eine Öffnung (10) begrenzt, die sich vom Boden des besagten ersten inneren Hohlraums (9, 109, 209) aus erstreckt, oder einen Vorsprung (118) aufweist, der sich in den besagten ersten inneren Hohlraum (9, 109, 209) erstreckt, wobei das besagte Abutment (3, 103, 203) einen Bereich, der, bei Verwendung, proximal (12, 112) zu dem besagten Verankerungskörper ist, und einen Bereich, der, bei Verwendung, distal (13, 113) von dem besagten Verankerungskörper (2, 102, 202) ist, umfasst, wobei das besagte Abutment (3, 103, 203) mit dem besagten Verankerungskörper (2, 102, 202) in Wirkverbindung bringbar ist, indem das besagte Verbindungselement (4, 104, 204) in der besagten Öffnung (10) oder mit dem besagten Vorsprung (118) in Eingriff gebracht wird, wobei das besagte Abutment (3, 103, 203) einen durchgehenden Längssitz (14, 15, 114, 115) mit einem Ende, das distal (14a) von dem besagten Verankerungskörper (2, 102, 202) ist, und einem Ende, das proximal (14b) zu dem letzteren ist, definiert, wobei das besagte Verbindungselement (4, 104, 204) in den besagten Längssitz (14, 15, 114, 115) einsetzbar ist, beginnend von dem besagten distalen Ende (14a), bis es in die besagte Öffnung (10) oder den besagten Vorsprung (118) eingreift und dadurch das besagte Abutment (3, 103, 203) und der besagte Verankerungskörper (2, 102, 202) gegenseitig festgehalten werden, worin ein Teil (13, 113) des besagten Abutments (3, 103, 203) in dem besagten ersten inneren Hohlraum (9, 109, 209) montiert ist, um einen Kugelgelenkeingriff zwischen dem Abutment (3, 103, 203) und dem Verankerungskörper (2, 102, 202) zu erhalten.

2. Implantat nach Anspruch 1, worin das besagte Verbindungselement (4, 104, 204) einstellbar beweglich ist zwischen mindestens einer Fixierungs- oder Stabilisierungsposition der Position des besagten Abutments (3, 103, 203) in Bezug auf den besagten Verankerungskörper (2, 102, 202), in welcher Position das besagte Abutment (3, 103, 203) in Bezug auf den besagten Verankerungskörper (2, 102, 202) nicht winkelmäßig versetzbar ist, und mindestens einer Freigabeposition des besagten Abutments (3, 103, 203), in welcher Position das besagte Abutment (3, 103, 203) in Bezug auf den besagten Verankerungskörper (2, 102, 202) winkelmäßig versetzbar ist, wobei das besagte Verbindungselement (4, 104, 204) mit der besagten Öffnung (10) oder dem besagten Vorsprung (118) mindestens in der Fixierungs- oder Stabilisierungsposition in Eingriff ist.

3. Implantat nach Anspruch 1 oder 2, worin das besagte Verbindungselement (4, 104, 204) von dem besagten distalen Ende (14a) aus betätigt wird oder betätigbar ist, um es zwischen der besagten mindestens einen Fixierungs- oder Stabilisierungsposition und der mindestens einen Freigabeposition zu bewegen.

4. Implantat nach Anspruch 1, 2 oder 3, worin der besagte durchgehende Längssitz von der Außenseite und in Richtung der Annäherung an den besagten Verankerungskörper (2, 102, 202) einen ersten Abschnitt (14) und somit mindestens einen zweiten Abschnitt (15) mit einem Bereich, der mindestens teilweise niedriger als der besagte erste Abschnitt (14) ist, aufweist, um eine innere Schulter (14b) zu definieren, die von dem besagten Verankerungskörper (2, 102, 202) abgewandt ist.

5. Implantat nach Anspruch 4, worin das besagte Verbindungselement (4, 104, 204) einen Abschnitt zum Eingriff (4b) in die besagte Öffnung (10) oder den besagten Vorsprung (118) mit einem ersten Bereich oder einer ersten Abmessung, der/die kleiner als der Bereich des besagten ersten Abschnitts (14) und des besagten zweiten Abschnitts (15) ist, sowie einen Abutmentabschnitt (4a) gegen die besagte innere Schulter (14b) mit einen zweiten Bereich oder einer Außenabmessung, der/die geringer als der Bereich des besagten ersten Abschnitts (14) und größer als der Bereich des besagten Längssitzes an der besagten inneren Schulter (14b) ist, umfasst.

6. Zahnimplantat nach irgendeinem der vorangegangenen Ansprüche, worin der besagte Kopfabschnitt (8, 108, 208) einstückig mit dem besagten Schaft (5, 105, 205) hergestellt ist.

7. Zahnimplantat nach irgendeinem der vorangegangenen Ansprüche, worin sich der besagte Schaft (5, 105, 205) entlang einer Längsachse (6, 106, 206) des besagten Verankerungskörpers (2, 102, 202) erstreckt, und worin das besagte Abutment (3, 103, 203) eine Achse (A) für die Installation einer Zahnkrone oder eines künstlichen Zahns identifiziert, wobei die besagte Achse (A) des besagten Abutments (3, 103, 203) mit einem Neigungswinkel zwischen etwa -50° und etwa +50° in Bezug auf die besagte Längsachse (6, 106, 206) des besagten Schaftes (5, 105, 205) des besagten Verankerungskörpers (2, 102, 202) neigbar ist.

8. Zahnimplantat nach irgendeinem der vorangegangenen Ansprüche, worin das besagte Abutment (3, 103, 203) einen Bereich, bei Verwendung, distal (12, 112) von dem besagten Verankerungskörper (2, 102, 202) mit einer im Wesentlichen zylindrischen oder kegelstumpfförmigen Konfiguration, definierend einen ersten Abschnitt (14, 114) des besagten Längssitzes, und einen Bereich, bei Verwendung, proximal (13, 113) zu dem besagten Verankerungskörper (2, 102, 202), mindestens teilweise als eine Kugel oder Teil einer Kugel konfiguriert, definierend einen zweiten Abschnitt (15, 115) des durchgehenden Längssitzes, umfasst.

9. Zahnimplantat nach irgendeinem der vorangegangenen Ansprüche, worin die besagte Öffnung (10) mit Innengewinde oder der besagte Vorsprung (118) mit Außengewinde versehen ist, während das besagte Verbindungselement (4, 104, 204) einen mit Außengewinde versehenen Schaft (4b) zum Eingriff in die besagte mit Innengewinde versehene Öffnung (10) oder einen mit Innengewinde versehenen Abschnitt zum Eingriff in den besagten mit Außengewinde versehenen Vorsprung (118) umfasst.

10. Zahnimplantat nach irgendeinem der vorangegangenen Ansprüche, wenn abhängig von Anspruch 5, worin der besagte Abutmentabschnitt (4a) des besagten Verbindungselements (4, 104, 204) als eine Kugel oder im Wesentlichen als eine Kugel konfiguriert ist, während der besagte Eingriffabschnitt (4b) als ein Schaft, der mindestens teilweise mit Außengewinde versehen ist, konfiguriert ist.

11. Zahnimplantat nach irgendeinem der vorangegangenen Ansprüche, worin das besagte Verbindungselement (4, 104, 204) an seinem von dem besagten Verankerungskörper distalen Ende einen Sitz (16) definiert, der mittels eines Werkzeugs in Eingriff bringbar ist, wodurch es möglich wird, das besagte Verbindungselement (4) in der besagten Öffnung (10) oder mit dem besagten Vorsprung (118) einzuspannen.

12. Zahnimplantat nach irgendeinem der vorangegangenen Ansprüche, worin das besagte Verbindungselement (4, 104, 204) einen Sitz (119b) für den Eingriff des besagten Vorsprungs (118) definiert.

13. Zahnimplantat nach irgendeinem der vorangegangenen Ansprüche, worin der besagte Verankerungskörper einen ersten Teil, der den besagten Kopfabschnitt (208) definiert, und einen zweiten Teil, der den besagten Schaft (205) definiert, umfasst, wobei der besagte Kopfabschnitt (208) mit dem besagten Schaft (205) lösbar verbindbar ist, wobei die besagte Öffnung in dem besagten Schaft (205) ausgebildet ist oder der besagte Vorsprung sich von dem besagten Schaft (205) erstreckt.

14. Implantat nach Anspruch 13, worin der besagte Schaft (205) eine Fläche (F) umfasst, die, bei Verwendung, dem besagten Abutment zugewandt ist, wobei in dem besagten Schaft ein Hauptsitz (205a) begrenzt ist, der eine erste Aussparung (205a1) und eine zweite Aussparung (205a2), die mit einem Innengewinde versehen ist und sich vom Boden der ersten Aussparung (205a1) aus erstreckt, umfasst, und worin der besagte Kopfabschnitt (208) röhrenförmig geformt ist und einen ersten Abschnitt (208a), im Wesentlichen als ein Abschnitt einer Kugel oder Halbkugel konfiguriert, der den besagten ersten inneren Hohlraum (9, 109, 209) definiert, und einen zweiten Bereich (208b), der sich von dem besagten ersten Abschnitt (208a) aus erstreckt und der im Wesentlichen auf Maß in die besagte erste Aussparung (205a1) eingesetzt werden kann, umfasst, wobei das besagte Abutment (203) mit dem besagten ersten Abschnitt (208a) in Wirkverbindung bringbar ist, indem das besagte Verbindungselement (204) in mindestens der besagten zweiten Aussparung (205a2) in Eingriff gebracht wird.

## Revendications

1. Implant dentaire (1, 100, 200) comprenant un corps de fixation (2, 102, 202), ledit corps de fixation (2, 102, 202) comportant une tige (5, 105, 205) ayant un filet (7, 107) pouvant être engagé dans un logement mandibulaire ou maxillaire, une butée (3, 103, 203) à laquelle une couronne dentaire peut être raccordée, dans lequel ledit corps de fixation (2, 102, 202) et ladite butée (3, 103, 203) sont opérationnellement raccordés l'un à l'autre par l'intermédiaire d'un élément de raccordement (4, 104, 204), ledit corps de fixation (2, 102, 202) comprenant une portion de tête (8, 108, 208) délimitant une première cavité interne (9, 109, 209), ledit corps de fixation (2, 102, 202) délimitant une ouverture (10) s'étendant depuis le bas de ladite première cavité interne (9, 109, 209) ou ayant une protubérance (118) s'étendant dans ladite première cavité interne (9, 109, 209), ladite butée (3, 103, 203) comprenant une section, pendant l'utilisation, proximale (12, 112) audit corps de fixation et une section, pendant l'utilisation, distale (13, 113) dudit corps de fixation (2, 102, 202), ladite butée (3, 103, 203) étant associable opérationnellement audit corps de fixation (2, 102, 202) en engageant ledit élément de raccordement (4, 104, 204) dans ladite ouverture (10) ou avec ladite protubérance (118), ladite butée (3, 103, 203) définissant un siège longitudinal (14, 15, 114, 115) traversant avec une extrémité distale (14a) dudit corps de fixation (2, 102, 202) et une extrémité proximale (14b) à ce dernier, ledit élément de raccordement (4, 104, 204) pouvant être inséré dans ledit siège longitudinal (14, 15, 114, 115) à partir de ladite extrémité distale (14a) jusqu'à ce qu'il s'engage avec ladite ouverture (10) ou ladite protubérance (118) et maintienne ainsi mutuellement ladite butée (3, 103, 203) et ledit corps de fixation (2, 102, 202) , dans lequel la partie (13, 113) de ladite butée (3, 103, 203) est montée dans ladite première cavité interne (9, 109, 209) afin d'obtenir un engagement à rotule entre la butée (3, 103, 203) et le corps de fixation (2, 102, 202).

2. Implant selon la revendication 1, dans lequel ledit élément de raccordement (4, 104, 204) est mobile de manière ajustable entre au moins une position de fixation ou de stabilisation de la position de ladite butée (3, 103, 203) par rapport audit corps de fixation (2, 102, 202), position dans laquelle ladite butée (3, 103, 203) ne peut pas être déplacée angulairement par rapport audit corps de fixation (2, 102, 202), et au moins une position de libération de ladite butée (3, 103, 203), position dans laquelle ladite butée (3, 103, 203) peut être déplacée angulairement par rapport audit corps de fixation (2, 102, 202), ledit élément de raccordement (4, 104, 204) étant en engagement avec ladite ouverture (10) ou ladite protubérance (118) au moins dans ladite position de fixation ou de stabilisation.

3. Implant selon la revendication 1 ou 2, dans lequel ledit élément de raccordement (4, 104, 204) est utilisé ou utilisable depuis ladite extrémité distale (14a) pour le déplacer entre ladite au moins une position de fixation ou de stabilisation et ladite au moins une position de libération.

4. Implant selon la revendication 1, 2 ou 3, dans lequel ledit siège longitudinal traversant a, de l'extérieur et dans la direction d'approche dudit corps de fixation (2, 102, 202), une première portion (14) et donc au moins une deuxième portion (15) ayant une section au moins partiellement inférieure à ladite première portion (14) afin de définir un épaulement interne (14b) orienté à l'opposé dudit corps de fixation (2, 102, 202).

5. Implant selon la revendication 4, dans lequel ledit élément de raccordement (4, 104, 204) comprend une portion d'engagement (4b) de ladite ouverture (10) ou de ladite protubérance (118) avec une première section ou encombrement plus petite que la section de ladite première portion (14) et de ladite deuxième portion (15) ainsi qu'une portion de butée (4a) contre ledit épaulement interne (14b) ayant une deuxième section ou encombrement externe inférieure à la section de ladite première portion (14) et supérieure à la section dudit siège longitudinal au niveau dudit épaulement interne (14b) .

6. Implant dentaire selon l'une quelconque des revendications précédentes, dans lequel ladite portion de tête (8, 108, 208) est faite d'une seule pièce avec ladite tige (5, 105, 205).

7. Implant dentaire selon l'une quelconque des revendications précédentes, dans lequel ladite tige (5, 105, 205) s'étend le long d'un axe longitudinal (6, 106, 206) dudit corps de fixation (2, 102, 202), et dans lequel ladite butée (3, 103, 203) identifie un axe (A) pour l'installation d'une couronne dentaire ou d'une dent artificielle, ledit axe (A) de ladite butée (3, 103, 203) étant inclinable d'un angle d'inclinaison entre approximativement -50° et environ +50° par rapport audit axe longitudinal (6, 106, 206) de ladite tige (5, 105, 205) dudit corps de fixation (2, 102, 202) .

8. Implant dentaire selon l'une quelconque des revendications précédentes, dans lequel ladite butée (3, 103, 203) comprend une section, pendant l'utilisation, distale (12, 112) dudit corps de fixation (2, 102, 202) avec une configuration sensiblement cylindrique ou frustoconique définissant une première portion (14, 114) dudit siège longitudinal et une section, pendant l'utilisation, proximale (13, 113) dudit corps de fixation (2, 102, 202) configurée au moins partiellement comme une sphère ou partie d'une sphère définissant une deuxième portion (15, 115) dudit siège longitudinal traversant.

9. Implant dentaire selon l'une quelconque des revendications précédentes, dans lequel ladite ouverture (10) est filetée intérieurement ou ladite protubérance (118) est filetée extérieurement, alors que ledit élément de raccordement (4, 104, 204) comprend une tige filetée extérieurement (4b) pour engager ladite ouverture filetée intérieurement (10) ou une portion filetée intérieurement pour engager ladite protubérance filetée extérieurement (118).

10. Implant dentaire selon l'une quelconque des revendications précédentes quand elle dépend de la revendication claim 5, dans lequel ladite portion de butée (4a) dudit élément de raccordement (4, 104, 204) est configurée comme une sphère ou sensiblement comme une sphère, alors que ladite portion d'engagement (4b) est configurée comme une tige qui est au moins partiellement filetée extérieurement.

11. Implant dentaire selon l'une quelconque des revendications précédentes, dans lequel ledit élément de raccordement (4, 104, 204), à son extrémité distale dudit corps de fixation, définit un siège pouvant être engagé (16) au moyen d'un outil, permettant ainsi de serrer ledit élément de raccordement (4) dans ladite ouverture (10) ou avec ladite protubérance (118).

12. Implant dentaire selon l'une quelconque des revendications précédentes, dans lequel ledit élément de raccordement (4, 104, 204) définit un siège (119b) pour l'engagement de ladite protubérance (118).

13. Implant dentaire selon l'une quelconque des revendications précédentes, dans lequel ledit corps de fixation comprend une première partie définissant ladite portion de tête (208) et une deuxième partie définissant ladite tige (205), ladite portion de tête (208) pouvant être raccordée de manière amovible à ladite tige (205), ladite ouverture étant formée dans ladite tige (205) ou ladite protubérance s'étendant depuis ladite tige (205).

14. Implant selon la revendication 13, dans lequel ladite tige (205) comprend une face (F), pendant l'utilisation, orientée face à ladite butée, ladite tige comprenant un siège principal (205a) comprenant un premier renfoncement (205a1) et un deuxième renfoncement (205a2) fileté intérieurement et s'étendant depuis le bas du premier renfoncement (205a1) et dans lequel ladite portion de tête (208) est de forme tubulaire et comprend une première portion (208a) sensiblement configurée comme une portion d'une sphère ou hémisphère définissant ladite première cavité interne (9, 109, 209) et une deuxième section (208b) s'étendant depuis ladite première portion (208a) et qui peut être insérée sensiblement à sa taille dans ledit premier renfoncement (205a1), ladite butée (203) étant associable opérationnellement à ladite première portion (208a) en engageant ledit élément de raccordement (204) dans au moins ledit deuxième renfoncement (205a2).
